# EUROPÄISCHE PATENTSCHRIFT

(11) **EP 4 703 823 B1**
(45) Veröffentlichungstag und Bekanntmachung des Hinweises auf die Patenterteilung: **21.10.2026**
(21) Anmeldenummer: 24196865.0
(22) Anmeldetag: 28.08.2024
(51) Int. Cl.: G05B 19/418, G05B 19/042, G06F 8/65, G06F 8/71

(54) **INDUSTRIESYSTEME UND VERFAHREN ZUM AKTUALISIEREN EINES SICHERHEITSPROGRAMMS**
INDUSTRIAL SYSTEMS AND METHODS FOR UPDATING A SECURITY PROGRAM
SYSTÈMES INDUSTRIELS ET PROCÉDÉS DE MISE À JOUR D'UN PROGRAMME DE SÉCURITÉ

(43) Veröffentlichungstag der Anmeldung: 04.03.2026
(73) Patentinhaber: SICK AG, 79183 Waldkirch (DE)
(72) Erfinder: LIEGIBEL, Pascal, 79183 Waldkirch (DE); NEUMANN, Thomas, 79227 Schallstadt (DE); HOFMANN, Christoph, 79183 Waldkirch (DE)
(74) Vertreter: Manitz Finsterwald Patent- und Rechtsanwaltspartnerschaft mbB

(56) Entgegenhaltungen:
- EP-A1- 4 303 723
- EP-A2- 2 048 561
- DE-A1- 10 346 478
- DE-T2- 69 938 547

## Beschreibung

Die Erfindung betrifft Industriesysteme und Verfahren zum Aktualisieren eines Sicherheitsprogramms.

Ein Industriesystem, beispielsweise eine Produktionsumgebung, beispielsweise eine Fertigungszelle, die aus einem Roboter, einer Maschine und Sicherheitseinrichtungen bestehen kann, kann eine Art automatisiertes Fertigungssystem sein, das darauf ausgelegt sein kann, eine bestimmte Aufgabe sicher und effizient auszuführen. Der Roboter kann für die Handhabung des Werkstücks und dessen Transport zwischen verschiedenen Maschinen und Arbeitsstationen verantwortlich sein. Die Maschine kann den eigentlichen Fertigungsvorgang ausführen, beispielsweise Schweißen, Schneiden oder Montieren. Die Sicherheitseinrichtungen können (beispielsweise durch Ausführen eines Sicherheitsprogramms) so ausgelegt sein, dass sie die Arbeiter vor allen mit dem Fertigungsprozess verbundenen Gefahren schützen.

Der Herstellungsprozess kann durch ein Programm geschützt sein, das auf einem Controller ausgeführt wird. Dieses Programm kann als Sicherheitsprogramm bezeichnet werden.

Dieses Programm kann für die Durchführung verschiedener Sicherheitsvorgänge verantwortlich sein, wie z.B. Anhalten des Roboters oder der Maschine, wenn ein Arbeiter die Arbeitszelle betritt; oder z.B. Verhindern des Starts des Roboters oder der Maschine, bis alle Sicherheitsvorrichtungen vorhanden sind und ordnungsgemäß funktionieren; oder z.B. Begrenzen der Geschwindigkeit und des Bewegungsbereichs des Roboters oder der Maschine, um Kollisionen mit Arbeitern oder anderen Objekten zu verhindern; oder z.B. Überwachen des Herstellungsprozesses auf Unregelmäßigkeiten oder Probleme und Abschalten des Roboters oder der Maschine, falls erforderlich.

Dabei kann es nötig sein, das Sicherheitsprogramm zu aktualisieren, beispielsweise um neue Funktionalität bereitzustellen, oder um Fehler im Sicherheitsprogramm zu beheben.

Es ist Aufgabe der Erfindung, ein Aktualisieren des Sicherheitsprogramms zu ermöglichen, ohne dabei die Sicherheit des Systems, das das Sicherheitsprogramm überwacht, zu gefährden.

DE 103 46 478 A1 offenbart ein System und Verfahren zum flexiblen Softwareupdate für Automatisierungssysteme über Internet. Hierzu weist das Automatisierungssystem eine spezielle Softwarekomponente auf, die zum Sammeln und zur Weitergabe von Informationen über das Automatisierungssystem in standardisierter Form vorgesehen ist. Die Softwarekomponente stellt die aktuelle Software- und/oder Hardwarekonfiguration des Automatisierungssystems, d. h. auf dem(n) Rechner(n) des Automatisierungssystems, fest.

EP 4 303 723 A1 offenbart ein computerimplementiertes Verfahren zum Upgraden und/oder Aktualisieren mindestens eines Dienstes aus einer Vielzahl von Diensten, die auf einem computerimplementierten System ausgeführt werden, wobei die Vielzahl von Diensten eine gemeinsame technische Anwendung in dem System implementiert, wobei das computerimplementierte Verfahren konfiguriert ist, um: mindestens eine aktualisierte Version des mindestens einen Dienstes, der aktualisiert oder upgegradet werden muss, auf dem System bereitzustellen und gleichzeitig die aktuelle Version des Dienstes auf dem System beizubehalten, wobei verhindert wird, dass die aktualisierte Version des mindestens einen Dienstes bestimmte Teile der gemeinsamen technischen Anwendung steuert; ein Überwachungsmodul bereitzustellen und zu betreiben, um die Kommunikation zwischen der Vielzahl von Diensten zu protokollieren und Abhängigkeiten zwischen Anwendungen der Dienste hinsichtlich ihrer Laufzeiten zu analysieren, wobei solche Abhängigkeiten aus Daten abgeleitet werden, die aus der protokollierten Kommunikation resultieren; Prozesszustände jedes mindestens einen Dienstes zu bestimmen, die für die Aktualisierung und/oder das Upgrade des Dienstes geeignet sind, indem aus den Abhängigkeiten abgeleitete Kriterien eingehalten werden, um geeignete Zeitfenster für die Aktualisierung und/oder das Upgrade des mindestens einen Dienstes zu identifizieren; die Steuerung der aktuellen Version des Dienstes innerhalb der aktuellen technischen Anwendung zu einem der identifizierten Zeitfenster zu deaktivieren; und die Steuerung der bereitgestellten aktualisierten Version des Dienstes innerhalb der aktuellen technischen Anwendung zu aktivieren.

EP 2 048 561 A2 offenbart Verfahren und Vorrichtungen zur Softwareaktualisierung in Prozessanlagen beschrieben. Ein Verfahren zur Softwareaktualisierung für ein Steuergerät eines Prozessleitsystems umfasst die Instanziierung einer Ersatzkomponente der Software, das Kopieren von Zustandsdaten einer vorhandenen Komponente auf die Ersatzkomponente und das Aktivieren der Ersatzkomponente, wenn ein erster Zustand der Ersatzkomponente mit einem zweiten Zustand der vorhandenen Komponente übereinstimmt.

DE 699 38 547 T2 offenbart ein System und ein Verfahren zum Bereitstellen von Software-Updates online. Die Updates können für einen oder mehrere einer Reihe von einzelnen Computern oder für ein Computernetzwerk bereitgestellt werden. Bei einer Ausfertigung werden die Software-Updates für einzelne Clients in einem Client-Server-Netzwerk bereitgestellt, zum Beispiel für ein Client-Server-Netzwerk des Typs, der eine teilweise replizierte relationale Datenbank oder ein Transaktionsverarbeitungssystem in einem Unternehmen in einem WAN oder einem LAN ausführt.

Die Lösung der Aufgabe erfolgt durch ein Industriesystem mit den Merkmalen des Anspruchs 1 und ein Verfahren zum Aktualisieren eines Sicherheitsprogramms mit den Merkmalen des Anspruchs 11.

Ein erfindungsgemäßes Industriesystem umfasst: einen Sensor und/ oder einen Aktor; eine Sicherheitsvorrichtung, eingerichtet zum Ausführen eines Sicherheitsprogramms zum Steuern des Sensors und/ oder des Aktors; und eine Aktualisierungsvorrichtung (welche auch als Update-Agent bezeichnet werden kann), eingerichtet zum: Erhalten einer Aktualisierungsinformation; Auswerten der Aktualisierungsinformation; Ermitteln (basierend auf dem Auswerten), ob die Aktualisierungsinformation auf das Sicherheitsprogramm angewendet werden kann (beispielsweise ohne ein Sicherheitsrisiko einzugehen); und basierend auf dem Ermitteln entweder Anwenden der Aktualisierungsinformation auf das Sicherheitsprogramm (falls ermittelt wird, dass die Aktualisierungsinformation auf das Sicherheitsprogramm angewendet werden kann), oder Verwerfen der Aktualisierungsinformation (falls ermittelt wird, dass die Aktualisierungsinformation nicht auf das Sicherheitsprogramm angewendet werden kann), wobei die Aktualisierungseinrichtung ferner eingerichtet ist zum Ermitteln, ob sich ein Sicherheitssystem, das von dem Sicherheitsprogramm überwacht wird, in einem vorgegebenen Zustand befindet; wobei das Auswerten der Aktualisierungsinformation und/ oder Anwenden der Aktualisierungsinformation auf das Sicherheitsprogramm nur ausgeführt wird, falls ermittelt wird, dass sich das Sicherheitssystem in einem vorgegebenen Zustand befindet; und wobei die Aktualisierungsinformation mindestens eine der folgenden Informationen aufweist: Information für ein Update des Sicherheitsprogramms; Information für eine Fehlerbehebung des Sicherheitsprogramm; Information für neue Funktionalität für das Sicherheitsprogramm, wobei das Auswerten der Aktualisierungsinformation einen automatisierten Abnahmetest aufweist, wobei zur Durchführung des Abnahmetests ein von einem Produktivsystem abgekapselter Namensraum eröffnet wird, wobei sich das Sicherheitssystem in einem sicheren Zustand befindet, sodass bei einem Testlauf der Zugriff auf den Sensor und/ oder den Aktor möglich ist und ein Ende-zu-Ende-Test stattfindet, ohne ein Sicherheitsrisiko einzugehen.

**In** anderen Worten kann vor Anwenden der Aktualisierungsinformation auf das Sicherheitsprogramm überprüft werden, ob die Aktualisierungsinformation auf das Sicherheitsprogramm angewendet werden kann (beispielsweise ohne dadurch ein Sicherheitsrisiko einzugehen).

Die vorhandene Hardware, auf der das Sicherheitsprogramm läuft, kann in Nodes als Rechenknoten unterteilt sein. **In** den Nodes wiederum kann es einen oder mehrere sogenannte Pods als Unterknoten und darin die Container mit den eigentlichen Micro-Services, beispielsweise Logikeinheiten samt zugehöriger Containerlaufzeit (container runtime) und damit allen Bibliotheken und für die Logikeinheit zur Laufzeit erforderlichen Abhängigkeiten.

Das Anwenden der Aktualisierungsinformation kann ein Verwenden von aktualisierten Pods beinhalten oder sein.

Das Auswerten der Aktualisierungsinformation kann ein Anwenden der Aktualisierungsinformation auf ein zweites Sicherheitsprogramm aufweisen. Dies kann als Sandbox-Verfahren bezeichnet werden. Hier können die Änderungen, die sich durch die Aktualisierungsinformation ergeben, zunächst in einem zweiten Sicherheitsprogramm, welches identisch sein kann zu dem Sicherheitsprogramm, getestet werden. Das zweite Sicherheitsprogramm kann aber nicht in einer Produktivumgebung eingesetzt sein, so dass hier keine "echten" Sicherheitsrisiken entstehen können.

Das Anwenden der Aktualisierungsinformation auf das Sicherheitsprogramm kann ein Verwenden des zweiten Sicherheitsprogramm als das Sicherheitsprogramm enthalten oder sein. Anschaulich kann, falls das zweite Sicherheitsprogramm auch nach Anwendung der Aktualisierungsinformation einwandfrei funktioniert, das zweite Sicherheitsprogramm als das Sicherheitsprogramm verwendet werden. Alternativ kann die Aktualisierungsinformation direkt auf das Sicherheitsprogramm angewendet werden, nachdem ein Testlauf mit dem zweiten Sicherheitsprogramm durchlaufen wurde.

Das Auswerten der Aktualisierungsinformation enthält einen automatisierten Abnahmetest.

Das Auswerten der Aktualisierungsinformation kann ein Überprüfen, ob alle zu aktualisierenden Teile des Sicherheitsprogramms von der Aktualisierungsinformation abgedeckt sind, enthalten oder sein. Damit kann sichergestellt werden, dass die Aktualisierung vollständig ausgeführt wird.

Das Auswerten der Aktualisierungsinformation kann ein Überprüfen, ob die Aktualisierungsinformation keinen Widerspruch beinhaltet, enthalten oder sein. Damit kann sichergestellt werden, dass die Aktualisierung konsistent über das gesamte Sicherheitsprogramm erfolgt.

Das Auswerten der Aktualisierungsinformation kann ein Überprüfen, ob die Aktualisierungsinformation keinen unterschiedlichen Versionsnummern beinhaltet, enthalten oder sein. Damit kann ein Versionsmismatch vermieden werden.

Das Auswerten der Aktualisierungsinformation kann auf einer digitalen Signatur von Artefakten, die in der Aktualisierungsinformation beschrieben sind, basieren.

Das Auswerten der Aktualisierungsinformation kann auf einer Checksumme basieren.

Die Aktualisierungseinrichtung ist ferner eingerichtet zum Ermitteln, ob sich ein Sicherheitssystem, das von dem Sicherheitsprogramm überwacht wird, in einem vorgegebenen Zustand befindet, wobei das Auswerten der Aktualisierungsinformation und/ oder Anwenden der Aktualisierungsinformation auf das Sicherheitsprogramm nur ausgeführt wird, falls ermittelt wird, dass sich das Sicherheitssystem in einem vorgegebenen Zustand befindet. Beispielsweise kann der vorgegebene Zustand ein Pausezustand oder ein vorgegebener sicherer Zustand sein. Damit kann sichergestellt werden, dass während der Aktualisierung kein Sicherheitsrisiko auftritt.

Die Aktualisierungsinformation enthält (oder ist) Information für ein Update des Sicherheitsprogramms und/oder eine Fehlerbehebung des Sicherheitsprogramm und/ oder neue Funktionalität für das Sicherheitsprogramm.

Der Aktor kann einen Roboter aufweisen oder ein Roboter sein und/oder eine Maschine aufweisen oder eine Maschine sein. Der Sensor kann eingerichtet sein zum Erfassung von Messdaten bezüglich eines Menschen in einer Umgebung des Aktors. Beispielsweise kann der Sensor Daten darüber liefern, ob sich der Mensch, der beispielsweise den Aktor bedient, wartet oder kontrolliert, einer potentiellen Gefahr durch den Aktor ausgesetzt ist. Beispielsweise kann der Aktor ein Roboter sein, und wenn der Sensor ermittelt, dass der Roboter sich auf den Menschen zubewegt, kann eine Sicherheitswarnung ausgegeben werden.

Die Aufgabe der Erfindung wird ferner durch ein Verfahren zum Aktualisieren eines Sicherheitsprogramms. Dabei ist das Sicherheitsprogramms eingerichtet, um in einer Sicherheitsvorrichtung ausgeführt zu werden zum Steuern eines Sensors eines Industriesystems und/ oder eines Aktors des Industriesystems. Das Verfahren zum Aktualisieren eines Sicherheitsprogramms umfasst: Erhalten einer Aktualisierungsinformation; Auswerten der Aktualisierungsinformation; Ermitteln (basierend auf dem Auswerten), ob die Aktualisierungsinformation auf das Sicherheitsprogramm angewendet werden kann (beispielsweise ohne ein Sicherheitsrisiko einzugehen); basierend auf dem Ermitteln entweder Anwenden der Aktualisierungsinformation auf das Sicherheitsprogramm (falls ermittelt wird, dass die Aktualisierungsinformation auf das Sicherheitsprogramm angewendet werden kann), oder Verwerfen der Aktualisierungsinformation (falls ermittelt wird, dass die Aktualisierungsinformation nicht auf das Sicherheitsprogramm angewendet werden kann); und Ermitteln, ob sich ein Sicherheitssystem, das von dem Sicherheitsprogramm überwacht wird, in einem vorgegebenen Zustand befindet; wobei das Auswerten (304) der Aktualisierungsinformation und/ oder Anwenden (308) der Aktualisierungsinformation auf das Sicherheitsprogramm nur ausgeführt wird, falls ermittelt wird, dass sich das Sicherheitssystem in einem vorgegebenen Zustand befindet; und wobei die Aktualisierungsinformation mindestens eine der folgenden Informationen aufweist: Information für ein Update des Sicherheitsprogramms; Information für eine Fehlerbehebung des Sicherheitsprogramm; Information für neue Funktionalität für das Sicherheitsprogramm, wobei das Auswerten der Aktualisierungsinformation einen automatisierten Abnahmetest aufweist, wobei zur Durchführung des Abnahmetests ein von einem Produktivsystem abgekapselter Namensraum eröffnet wird, wobei sich das Sicherheitssystem in einem sicheren Zustand befindet, sodass bei einem Testlauf der Zugriff auf den Sensor und/ oder den Aktor möglich ist und ein Ende-zu-Ende-Test stattfindet, ohne ein Sicherheitsrisiko einzugehen.

Ferner kann ein computerlesbares Speichermedium bereitgestellt werden, das Befehle umfasst, die bei der Ausführung durch einen Computer diesen veranlassen, das hierin beschriebene Verfahren auszuführen.

Weitere vorteilhafte Ausgestaltungen der erfindungsgemäßen Verfahren ergeben sich aus den Unteransprüchen, der Zeichnung und der Beschreibung.

Die Erfindung wird nachfolgend anhand von Ausführungsbeispielen mit Bezug auf die Zeichnung beschrieben. Es zeigen in schematischen Darstellungen:
- Fig. 1: eine Produktionsumgebung gemäß einer Ausführungsform;
- Fig. 2: ein Industriesystem gemäß einer Ausführungsform; und
- Fig. 3: ein Flussdiagramm, das ein Verfahren zum Aktualisieren eines Sicherheitsprogramms gemäß einer Ausführungsform veranschaulicht.

Nachfolgend werden die erfindungsgemäßen Verfahren und Vorrichtungen exemplarisch anhand von Ausführungsbeispielen erläutert.

In einer Ausführungsform kann eine GitOps-basierte Bereitstellung über ein drahtloses Netzwerk (was auch als over-the-air deployment) von Kubernetes (beispielsweise von einer sicheren Container-Orchestrierungssoftware, wie sie beispielsweise in den europäischen Patentanmeldungen 24 176 635.1 und 24 176 655.9 beschrieben ist) in einem IIoT (Industrial Internet of Things)-Kontext bereitgestellt werden. Beispielsweise können Normen und eine sicherheitskonformer Rollout von Sicherheitssoftware für Kubernetes (beispielsweise von einer sicheren Container-Orchestrierungssoftware, wie sie beispielsweise in den europäischen Patentanmeldungen 24 176 635.1 und 24 176 655.9 beschrieben ist) bereitgestellt werden.

GitOps ist ein Konzept, das über einen deklarativen Ansatz (also einem Ansatz, in dem beispielsweise ein gewünschter Softwarestand für die jeweilige Hardware definiert wird) Infrastrukturen und Anwendungen verwaltet und mit Git, einem weit verbreiteten Versionskontrollsystem in der Software-Entwicklung, kontrolliert. Ziel ist es, automatisierte Abläufe, Zeitersparnis und eine bessere Zusammenarbeit zwischen Teams zu ermöglichen. Dabei kann der Zielzustand eines Systems deklarativ beschrieben werden, Änderungen über Pull-Requests vorgenommen werden, und der GitOps-Operator für die Übernahme dieser Änderungen in die Live-Infrastruktur sorgen.

Kubernetes bietet mehrere Mechanismen zum Aktualisieren (in anderen Worten: zum Update) von Deployments. Eine Strategie ist Rolling-Update, welches die schrittweise Bereitstellung neuer Versionen von Anwendungen ermöglicht, während gleichzeitig die Verfügbarkeit der Anwendung aufrechterhalten wird.

Ein Rolling-Update kann wie folgt erfolgen:
a. Zunächst wird die Konfigurationsdatei des Deployments aktualisiert, um die gewünschte neue Version der Anwendung anzugeben. Dies kann durch Ändern der Bildversion oder anderer Konfigurationseinstellungen erfolgen.
b. Nachdem die Konfigurationsdatei aktualisiert wurde, erstellt Kubernetes allmählich neue Pods, die auf der neuen Konfiguration basieren. Diese neuen Pods werden schrittweise gestartet, um die Ressourcen des Clusters nicht übermäßig zu belasten.
c. Während neue Pods gestartet werden, überwacht Kubernetes den Fortschritt des Rolling Updates. Es stellt sicher, dass die definierten Kriterien wie die maximale Anzahl nicht verfügbarer Pods und die maximale Anzahl zusätzlicher Pods eingehalten werden.
d. Nachdem die neuen Pods erfolgreich gestartet wurden, überprüft Kubernetes, ob sie ordnungsgemäß funktionieren. Es überwacht ihre Gesundheit und führt bei Bedarf automatische Rollbacks durch, wenn Probleme auftreten.
e. Wenn die neuen Pods bereit sind und erfolgreich funktionieren, beginnt Kubernetes, die alten Pods schrittweise außer Betrieb zu nehmen. Dies geschieht, um die Anwendung schrittweise auf die neue Version umzuschalten, während gleichzeitig ein kontinuierlicher Betrieb aufrechterhalten wird.
f. Sobald alle neuen Pods gestartet und die alten Pods außer Betrieb genommen wurden, ist das Rolling-Update abgeschlossen. Die Anwendung läuft nun mit der neuen Version, ohne dass es zu größeren Ausfallzeiten oder Unterbrechungen kommt.

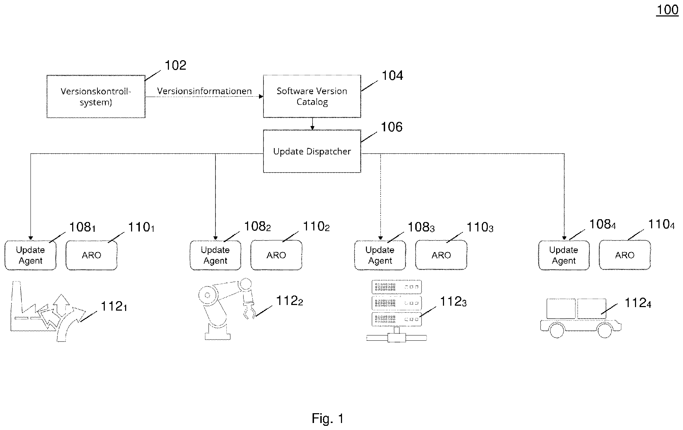

Fig. 1 zeigt eine Produktionsumgebung 100 gemäß einer Ausführungsform mit einem Versionskontrollsystem 102 (beispielsweise Git), einem Software-Version-Catalog 104 und einem Update-Dispatcher 106. Verschiedene Maschinen oder Roboter (beispielsweise mobile Roboter), Server oder Rechenzentren 1121, 1122, 1123, 1124 werden jeweils über einen Update-Agent 1081, 1082, 1083, 1084 und einen Automated Resource Orchestrator 1101, 1102, 1103, 1104 überwacht.

Die unterschiedlichen Empfänger auf der unteren Hälfte von Fig. 1 symbolisieren die möglichen Empfänger von Updates. Diese Empfänger von Updates können als Deployment-Ziele oder Deployment-Targets bezeichnet werden. Dies können beispielsweise Geräte, Maschinen, oder Rechenzentren von Kunden sein. Die Deployment-Ziele können außerhalb des direkten Einflussbereichs des Unternehmens, das das Sicherheitsprogramm bereitstellt, stehen. Auf den Deployment-Zielen kann beispielsweise Kubernetes laufen. Ein Deployment-Ziel kann auch als Cluster bezeichnet werden.

Sowohl der Software-Version-Catalog (SVC, welcher auch als Software-Version-Katalog SVK bezeichnet werden kann) als auch Update-Dispatcher und Versionskontrollsystem können in einem Rechenzentrum oder komplett in einer Cloud eines beliebigen Public Cloud Anbieters (beispielsweise AWS, Azure, GCP, IBM, Alibaba Cloud) ausgeführt werden. Auch eine Hybride Lösung mit Teilen im Rechenzentrum und andere Teile in der Cloud kann Anwendung finden.

In einer Ausführungsform wird eine Kombination eines ARO (Automated Resource Orchestrator, wie er beispielsweise in der europäischen Patentanmeldung 24 176 635.1 beschrieben ist) und einem Update-Agent, wie er hierin beschrieben wird, bereitgestellt.

In einer Ausführungsform wird ein Update-Dispatcher bereitgestellt. Der Update-Dispatcher kann Buch führen über die aktuell auf den unterschiedlichen Zielsystemen installierte Safety-Programme. Dazu kann der Update-Dispatcher den aktuellen Versionsstand der installierten Safety-Programme und gegebenenfalls deren Parametrierung erkennen. Der Update-Dispatcher kann alle Safety-Programme kennen, sowie deren Versionsstände, Artefakte und Abhängigkeiten, die bereit sind zur Installation auf einem Zielsystem, und diese in einem Software-Version-Katalog speichern. Der Update-Dispatcher kann kontinuierlich den Katalog der Zielsysteme mit dem Software Version Katalog abgleichen und so die Safety-Programme und deren Version, die auf den einzelnen Zielsystemen installiert werden müssen, ermitteln. Der Update-Dispatcher kann die zu installierenden Safety-Programme an die Zielsysteme übertragen. Der Update-Dispatcher kann über ein rollenbasiertes Sicherheitskonzept verfügen, das nur bestimmten Personen bestimmte Handlungen gestattet.

Die Ausbildung des Update-Dispatchers kann entweder eine Eigenentwicklung sein oder aus einem bereits bestehenden und im Cloud-Computing / Softwareentwicklung etablierten Tool realisiert werden.

Beispielsweise können die folgenden Tools einzeln für sich eingesetzt werden oder auch in Teilen sich gegenseitig ergänzen (beispielsweise könnte ArgoCD mit einem Hauptfokus auf Continious Delivery und Keptn zur Überwachung eines Services Level Objectives (SLO) zum Einsatz kommen):
- ArgoCD (welches einen CNCF (Cloud Native Computing Foundation) - Status von "graduated" hat) ist ein Kubernetes-natives Werkzeug zum Ausführen von Workflows, Verwalten von Clustern und "do GitOps right".
   "do GitOps right" ist der Slogan von ArgoCD und bezieht sich auf das Einhalten von "Best Practices", was ArgoCD unterstützt bzw. erzwingt. Zu diesen gehören unter anderem:
   - Trennung von Applikation Source Code und Applikation Konfiguration;
   - Bereitstellung eines übersichtlichen Audit Logs;
   - Zugriff bzw. Verwaltung von mehreren Git-Repositories mit Source Code, aber nur ein Config Repository für die Bereitstellung;
   - Aufteilung von Zugriffsrechten auf Source Code vs. Zugriffsrecht auf Konfigurationen.
- Flux (welches einen CNCF-Status von "graduated" hat) ist eine offene und erweiterbare Lösung zum kontinuierlichen Ausliefern von Kubernetes und wird vom GitOps Toolkit betrieben.
- Keptn (welches einen CNCF-Status von "incubating" hat) ist eine cloud-native Anwendungs-Lebenszyklus-Orchestrierung. Keptn kann die SLO (Service Level Objective; Service-Level-Ziel)-getriebene multi-stage Auslieferung automatisieren und Betrieb und Remediation von Anwendungen bereitstellen.

In einer Ausführungsform kann ein Update-Agent bereitgestellt werden. Der Update-Agent selbst ist weder Bestandteil von Kubernetes noch von irgendwelchen anderen Drittanbieter-Technologien. Der Update-Agent kann die im folgenden beschriebenen Aufgaben übernehmen, um einen Update Prozess auf Seiten des Deployment-Zieles durchzuführen bzw. Informationen über ein Update bereitzustellen.

Der Update-Agent kann den aktuellen Versionsstand der auf dem Zielsystem installierten Software Programme an den Update-Dispatcher übermitteln. Für die Ermittlung des aktuellen Versionsstandes der auf dem Zielsystem befindlichen Software-Ressourcen (wie beispielsweise Safety-Programm oder Kubernetes-Informationen) kann der Update-Agent auf zwei Informationsquellen zurückgreifen: den Kubernetes-API-Server und den ARO.

Der Kubernetes-API-Server bietet eine REST Programmierschnittstelle, um alle sich im Clusterbefindlichen Kubernetes-Objekte (Deployments, Replica Sets, Daemon Sets, ...) abzurufen. Anhand dieser Schnittstelle lassen sich daher die derzeitigen Versionen von Container-Images oder anderen Objekten bestimmen und an einen Update-Dispatcher weiterleiten.

Der ARO (wie er beispielsweise in der europäischen Patentanmeldung 24 176 635.1 beschrieben ist) enthält safety-relevante Konfigurationen und kann diese dem Update-Agent aktiv über eine gängige Schnittstelle mitteilen (beispielsweise REST (Representational State Transfer )-Schnittstelle oder gRPC). Die Konfigurationsinformationen können vom Update-Agent gebündelt werden zusammen mit den Objektinformationen von Kubernetes.

Der Update-Agent kann die Konsistenz der erhaltenen Software Programm Distributionen überprüfen. Dies kann die Überprüfung einzelner Komponenten beinhalten. Beispielsweise kann überprüft werden, ob alle Bestandteile eines Safety-Programms aktualisiert wurden (beispielsweise auf Basis von Container ImageHashes bzw. Versionsnummern des Safety-Programms). Es kann überprüft werden, ob die Aktualisierungen sich nicht widersprechen (beispielsweise mittels einer logischen Überprüfung im Zusammenspiel mit dem ARO (beispielsweise hat ein Safety-Programm exakt einen Root-Node (wie er beispielsweise in der europäischen Patentanmeldung 24 176 635.1 beschrieben ist), oder referenziert ein Safety-Programm auf eine nachdem Update obsolete Funktion). Es kann überprüft werden, ob es einen Versions-Missmatch zwischen einzelnen Komponenten eines Safety-Programms oder einen Versionskonflikt von Abhängigkeiten eines Safety-Programms gibt (beispielsweise durch Überprüfung anhand der Update-Informationen, die der Update-Dispatcher bereitstellt).

Zur Überprüfung des Updatevorganges können eine (oder mehrere) digitale Signatur(en) der Artefakte sowie eine Checksumme zum Einsatz kommen. Für Teile des Safety-Subsystems (beispielsweise ARO) können noch weitere Mechanismen zum Einsatz kommen (beispielsweise Blockchain Verifikation), da diese Komponenten von außerordentlicher Bedeutung für die Safety sind.

Der Update-Agent kann dem lokalen Safety-Engineer mitteilen, dass eine neue Version eines Safety-Programms (in anderen Worten: Sicherheitsprogramm) zur Installation bereit steht.

Der Update-Agent kann ferner auch die zentrale Funktion als "Reconciliation Sentinels" (was soviel wie Schlichtungswächter bedeutet) einnehmen. Die Bezeichnung "Reconciliation Sentinel" ist eine eigene Bezeichnung. Es gibt keine Bezeichnung oder Verfahren in Kubernetes mit dieser Bezeichnung. In dieser Rolle führt der Update-Agent einen automatisierten Abnahme- bzw. Inbetriebnahmetest aus, der an folgende Kriterien geknüpft ist bzw. entsprechende Charakteristika/Vorgehensweisen aufweist, wie es im Folgenden beschrieben wird.

Der Update-Agent kann sicherstellen, dass das System sich in einem sicheren Zustand (der eine Aktualisierung zulässt) befindet. Kann der Update-Agent keinen sicheren Zustand feststellen, kann er die Aktualisierung zurückhalten. Wie dieser Zustand aussieht, kann applikationsspezifisch und Teil der Sicherheitsbetrachtung innerhalb eines Safety-Entwicklungsprozesses sein. Beispielsweise könnte bei einem autonomen mobilen Roboter (AMR) dieser Zustand erreicht sein, wenn sich der AMR auf einer Ladestation befindet. In diesem Zustand steht die Sensorik und Aktorik zur Verfügung, ohne dabei einen Betrieb unterbrechen zu müssen.

Zur Durchführung des Abnahmetests kann der Update-Agent einen vom Produktivsystem abgekapselten Namensraum eröffnen, der für eine softwareseitige Isolation der Software-/Kubernetes-Ressourcen sorgt (was als Sandbox bezeichnet werden kann). Der Update-Agent kann im Zusammenspiel mit dem ARO für die Bereitstellung der aktualisierten Objekte/Container sorgen und einen applikationsspezifischen Abnahmetest durchführen. Da sich dann die Maschine (z.B. AMR) in einem sicheren Zustand befindet und daher keine produktive Arbeitslast vorhanden ist, ist beim Testlauf der Zugriff auf sämtliche Sensorik und Aktorik möglich, sodass ein Ende-zu-Ende-Test stattfindet, ohne ein Sicherheitsrisiko einzugehen.

Der Update-Agent kann im Safety-Subsystem (wie es beispielsweise in den europäischen Patentanmeldungen 22 216 057.4, 24 176 635.1 und 24 176 655.9 beschrieben ist) die Durchführung des Testlaufes bekannt machen. Auf diese Weise kann das Safety-Subsystem (beispielsweise durch einen System-Interrupter) aktives Ansteuern von Ausgängen (z.B. OSSD; Output Signal Switching Device) oder Aktorik abfangen, prüfen und die Information an den Update-Agent weiterreichen. Auf diese Weise kann ein Kreislauf im Test entstehen und der Update-Agent kann das Update abschließen oder den Test wiederholen.

Der System-Interrupter kann auch als Abschaltdienst bezeichnet werden und kann eine zentrale Komponente der Safety-Infrastruktur sein, die einen Notaus veranlassen würde. Der System-Interrupter kann in diesem Fall den Testlauf erkennen und das Signal zum Abschalten abfangen bzw. auswerten, um den Abnahmetest abzuschließen. Details zum System-Interrupter sind auch in der europäischen Patentanmeldungen 22 216 057.4 näher beschrieben.

Nach erfolgreichem Update und der Abnahme kann die Maschine weiter im normalen Betrieb arbeiten.

Der Software Versions Katalog (SVC oder SVK) kann eine Art Metadatenbank sein, der folgende Verantwortlichkeiten zugeordnet sind: Zuordnung von Versionsnummern auf Deployment-Artefakte; und/ oder Darstellung von Safety-Programmen inklusive deren Abhängigkeiten.

Abhängigkeiten können hier sowohl andere Safety-Programme, benötigte Hardware oder auch externe Maschinen und oder ein Roboter sein.

Die notwendigen Informationen können dem SVC über eine einfache Programmierschnittstelle durch externe Systeme oder Akteure (beispielsweise Produktmanager) bereitgestellt werden. Die Programmierschnittstelle kann so ausgestaltet sein, dass sie die folgenden Operationen unterstützt: Hinzufügen von Version-Artefakt Zuordnungen; und/ oder Abfrage von Zuordnungen und Abhängigkeiten; und/ oder Löschen von Zuordnungen; und/ oder Markieren von Zuordnungen als veraltet.

Eine Möglichkeit zur Aktualisierung von Zuordnungen bietet der SVK nicht, um eine Konsistenz zu gewährleisten.

Der SVK kann eine Datenbank sein (beispielsweise relationale oder NoSQL Datenbank). Benötigte Informationen kann sich der SVK zum Teil selbstereignisgesteuert über Metadaten gespeicherter Artefakte holen (beispielsweise Hashes zur Verifikation) zum anderen Teil kann er auf die aktive Eingabe von Daten von Akteuren angewiesen sein. Akteure können sowohl beteiligte Menschen (beispielsweise Produktmanager oder Safety-Ingenieur) als auch automatisierte Mechanismen (z.B. CI/CD Pipeline, Software Bill of Materials) sein.

Der SVK kann einen Audit-Trail, der Änderungen nachvollziehbar protokolliert, ausführen. Die Ausgestaltung des Audit-Trail kann variabel sein und kann von einem einfachen Versionskontrollsystem wie Git über gesicherte Log-Dateien bis hin zu einer verteilten Blockchain gehen.

Der SVK kann mittels einer Datenbank verschiedenster Hersteller (MySQL, Oracle, Postgres, ...) implementiert sein und kann verschiedene Formen (beispielsweise relational oder dokumentorientiert) haben, oder es kann ein Ratifizierungstool wie Notary zum Einsatz kommen, um etwaige Software-Artefakte zu signieren und zu verifizieren.

Das Notary Project (welches einen CNCF-Status von "incubating" hat) kann Artefakte signieren und verifizieren, und des kann die Sicherheit der Softwareauslieferung von Deployment zu Deployment unterstützen.

Ein beispielhafter Ablauf der Verteilung von Safety-Programmen an verschiedene Zielsysteme kann gemäß verschiedener Ausführungsformen wie folgt sein:
Schritt 0: Der Software Version Katalog erhält kontinuierlich Informationen über Safety-Programme, die bereitstehen zur Installation auf einem Zielsystem. Diese Informationen können entweder manuell oder automatisch aus einem Build-System in den Software Version Katalog übertragen werden. Zu den Informationen, die im Software-Version-Katalog abgelegt werden, gehören die Versionsnummer, Artefakte und Abhängigkeiten der installierbaren Software Programme.

Schritt 1: Der Update-Dispatcher erhält kontinuierlich Informationen von den Zielsystemen über die installierten Safety-Programme.

Schritt 2: Entweder gibt ein Akteur eine Version eines Safety-Programms manuell frei oder der Update-Dispatcher entscheidet eigenständig, dass eine Version eines Safety-Programms auf Zielsystemen installiert werden kann. Die automatische Freigabe von Software Versionen kann insbesondere Anwendung angewendet werden für die Freigabe von Versionen, die keine veränderte/erweiterte Funktionalität enthalten (z.B. Bugfix).

Schritt 3: Der Update-Dispatcher gleicht kontinuierlich den Software-Version-Katalog mit den Informationen über die Safety-Programme auf den Zielsystemen ab und ermittelt die auf den einzelnen Zielsystemen zu installierenden Versionen eines Safety-Programms. Für die ermittelten Safety-Programm-Versionen überträgt er die Artefakte und Metadaten auf die Zielsysteme.

Schritt 4: Nachdem der Update-Agent die Distribution einer Safety-Programm-Version erhalten hat, überprüft er diese auf ihre Konsistenz und benachrichtigt den lokalen Safety-Ingenieur, dass ein neues Safety-Programm zur Installation bereit steht.

Schritt 5: Der lokale Safety-Ingenieur entscheidet sich, eine neue Version des Safety-Programms zu installieren und gibt dieses über die Benutzeroberfläche frei.

Schritt 6: Die bereits laufende Version des Safety-Programms wird deaktiviert und gelöscht.

Schritt 7: Die neue Version des Safety-Programms wird installiert.

Schritt 8: Der lokale Safety-Ingenieur überprüft die Installation des Safety-Programms sowie deren Funktionalität.

Schritt 9: Der lokale Safety-Ingenieur aktiviert das neu installierte Safety-Programm und gibt es frei.

Mit den Verfahren und Vorrichtungen gemäß verschiedener Ausführungsformen kann eine schnelle Verteilung von Safety-Software-Updates und -Lösungen bereitgestellt werden. Es können neue Möglichkeiten von dynamischen Anpassungen und Agilität in der Safety-Domäne bereitgestellt werden.

Mit den Verfahren und Vorrichtungen gemäß verschiedener Ausführungsformen können Safety-Innovationen mit einer ähnlich hohen Geschwindigkeit an die Kunden gebracht werden, wie es in der traditionellen Software- und Informationstechnologiebranche seit längerer Zeit üblich ist.

In einer Ausführungsform kann ein Rolling-Update-Mechanismus eingesetzt werden, bei dem es keinerlei Downtime gibt.

In einer Ausführungsform wird zur Umsetzung des rollenbasierten Sicherheitskonzepts (das nur bestimmten Personen bestimmte Handlungen gestattet) beispielsweise eine Zwei-Faktor-Authentifizierung eingesetzt (beispielsweise im oben beschriebenen Schritt 5).

In einer Ausführungsform wird für das Scharfschalten der neuen Safety-Applikation beispielsweise ein TAN (Transaktionsnummer)-Verfahren oder Pass-Keys eingesetzt (beispielsweise im oben beschriebenen Schritt 9).

Es wird verstanden werden, dass, obwohl die obigen Beispiele sich teilweise auf Kubernetes beziehen, die Verfahren und Vorrichtungen gemäß verschiedener Ausführungsformen auch auf andere Systeme, insbesondere andere Systeme zur Container-Verwaltung, eingesetzt werden können.

In den Verfahren und Vorrichtungen gemäß verschiedener Ausführungsformen kann der Update-Agent auf dem Zielsystem deployed sein und dort Informationen sammeln (beispielsweise Informationen darüber, welche Hardware vorhanden ist, und/ oder welcher Zustand vorhanden ist). Dabei kann eine Konsistenzüberprüfung von erhaltener Software erfolgen und danach ein automatisierter Abnahme- und Inbetriebnahmetest durchgeführt werden. Das Update kann zunächst in einer Sandbox angewendet werden und dort der Inbetriebnahmetest (wobei die Erwartungshaltung ist bekannt ist) ausgeführt werden. Updates können auch komplett neue Funktionen hinzufügen, um beispielsweise Fähigkeiten der Sensoren zu erweitern, und das kann dann eine andere (oder neue) Erwartungshaltung zur Folge haben.

Mit den Verfahren und Vorrichtungen gemäß verschiedener Ausführungsformen kann eine Verteilung der Updates und dadurch eine bessere Dynamik erreicht werden. Es ist möglich, ohne Downtime während der Produktivphase die Tests durchzuführen.

Es können Coding-Guidelines für sicherheitsrelevante Komponenten berücksichtigt werden. Beispielsweise kann die Struktur des Programmcodes vorgegeben sein, es kann defensive Programmierung zum Einsatz kommen, es können Unit-Tests oder Component-Tests ausgeführt werden. Ferner kann überprüft werden, , ob ein Paket auf dem Zielsystem auch wirklich angekommen ist (beispielsweise mittels Rückversicherung über einen Packet Manager), was als Vorstufe zu einem Abnahmetest (welcher als Plugin im Update-Agent bereitgestellt werden kann) angesehen werden kann. Es kann applikationsspezifisch getestet werden, ob Sensorik und Aktorik funktioniert.

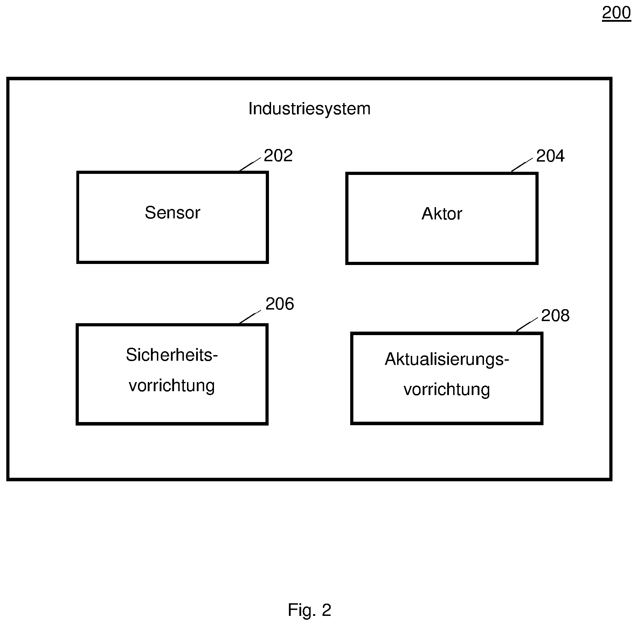

Fig. 2 zeigt ein Industriesystem 200 gemäß einer Ausführungsform. Das Industriesystem 200 kann einen Sensor 202 und/ oder einen Aktor 204 beinhalten. Das Industriesystem 200 kann ferner eine Sicherheitsvorrichtung 206 enthalten, die eingerichtet sein kann zum Ausführen eines Sicherheitsprogramms zum Steuern des Sensors 202 und/ oder des Aktors 204. Das Industriesystem 200 kann ferner enthalten eine Aktualisierungsvorrichtung 208, die eingerichtet sein kann zum: Erhalten einer Aktualisierungsinformation; Auswerten der Aktualisierungsinformation; basierend auf dem Auswerten Ermitteln, ob die Aktualisierungsinformation auf das Sicherheitsprogramm angewendet werden kann; und basierend auf dem Ermitteln entweder Anwenden der Aktualisierungsinformation auf das Sicherheitsprogramm oder Verwerfen der Aktualisierungsinformation.

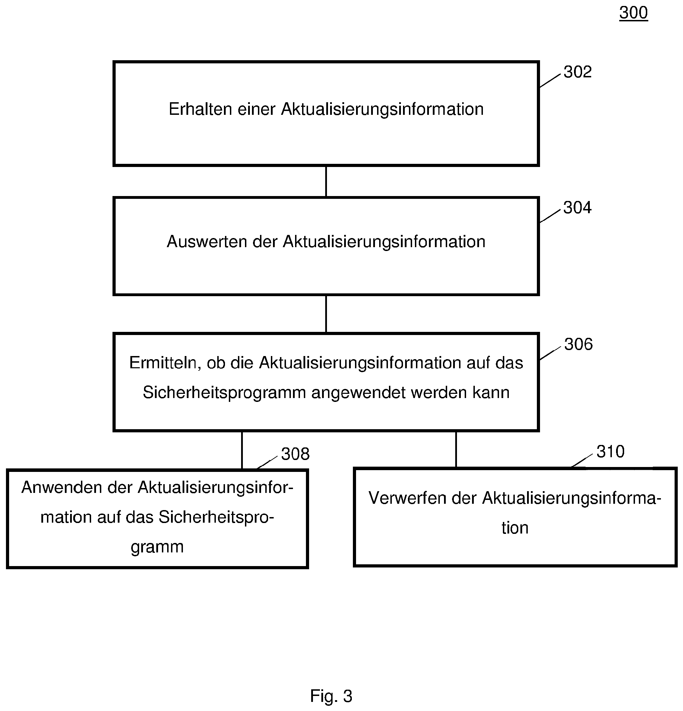

Fig. 3 zeigt ein Flussdiagramm 300, das ein Verfahren zum Aktualisieren eines Sicherheitsprogramms gemäß einer Ausführungsform veranschaulicht. Das Sicherheitsprogramms kann eingerichtet sein, um in einer Sicherheitsvorrichtung ausgeführt zu werden zum Steuern eines Sensors eines Industriesystems und/ oder eines Aktors des Industriesystems. In 302 wird eine Aktualisierungsinformation erhalten. In 304 wird die Aktualisierungsinformation ausgewertet. In 306 wird ermittelt, ob die Aktualisierungsinformation auf das Sicherheitsprogramm angewendet werden kann. Dann wird basierend auf dem Ermitteln 306 entweder in 308 die Aktualisierungsinformation auf das Sicherheitsprogramm angewendet oder in 310 die Aktualisierungsinformation verworfen.

### Bezugszeichenliste

- 100: Produktionsumgebung
- 102: Versionskontrollsystem
- 104: Software-Version-Catalog
- 106: Update-Dispatcher
- 108ᵢ: Update-Agent
- 110i: Automated Resource Orchestrator
- 112ᵢ,: Roboter oder Maschine

- 200: Industriesystem
- 202: Sensor
- 204: Aktor
- 206: Sicherheitsvorrichtung
- 208: Aktualisierungsvorrichtung

- 300: Flussdiagramm, das ein Verfahren zum Aktualisieren eines Sicherheitsprogramms gemäß einer Ausführungsform veranschaulicht
- 302: Schritt des Erhaltens einer Aktualisierungsinformation
- 304: Schritt des Auswertens der Aktualisierungsinformation
- 306: Schritt des Ermittelns, ob die Aktualisierungsinformation auf das Sicherheitsprogramm angewendet werden kann
- 308: Schritt des Anwendens der Aktualisierungsinformation auf das Sicherheitsprogramm
- 310: Schritt des Verwerfens der Aktualisierungsinformation

## Patentansprüche

1. Industriesystem (200), aufweisend:
einen Sensor (202) und/ oder einen Aktor (204);
eine Sicherheitsvorrichtung (206), eingerichtet zum Ausführen eines Sicherheitsprogramms zum Steuern des Sensors (202) und/ oder des Aktors (204); und
eine Aktualisierungsvorrichtung (208), eingerichtet zum:
Erhalten (302) einer Aktualisierungsinformation;
Auswerten (304) der Aktualisierungsinformation;
basierend auf dem Auswerten (304) Ermitteln (306), ob die Aktualisierungsinformation auf das Sicherheitsprogramm angewendet werden kann; und
basierend auf dem Ermitteln (306) entweder Anwenden (308) der Aktualisierungsinformation auf das Sicherheitsprogramm oder Verwerfen (310) der Aktualisierungsinformation;
wobei die Aktualisierungseinrichtung (208) ferner eingerichtet ist zum Ermitteln, ob sich ein Sicherheitssystem, das von dem Sicherheitsprogramm überwacht wird, in einem vorgegebenen Zustand befindet;
wobei das Auswerten (304) der Aktualisierungsinformation und/ oder Anwenden (308) der Aktualisierungsinformation auf das Sicherheitsprogramm nur ausgeführt wird, falls ermittelt wird, dass sich das Sicherheitssystem in einem vorgegebenen Zustand befindet;
wobei die Aktualisierungsinformation mindestens eine der folgenden Informationen aufweist: Information für ein Update des Sicherheitsprogramms; Information für eine Fehlerbehebung des Sicherheitsprogramm; Information für neue Funktionalität für das Sicherheitsprogramm;
wobei das Auswerten (304) der Aktualisierungsinformation einen automatisierten Abnahmetest aufweist, wobei zur Durchführung des Abnahmetests ein von einem Produktivsystem abgekapselter Namensraum eröffnet wird, der für eine softwareseitige Isolation der Software-Ressourcen sorgt,
wobei sich das Sicherheitssystem in einem sicheren Zustand befindet, sodass bei einem Testlauf der Zugriff auf den Sensor (202) und/ oder den Aktor (204) erfolgt und ein Ende-zu-Ende-Test stattfindet.

2. Industriesystem (200) nach Anspruch 1,
wobei das Auswerten (304) der Aktualisierungsinformation ein Anwenden der Aktualisierungsinformation auf ein zweites Sicherheitsprogramm aufweist.

3. Industriesystem (200) nach Anspruch 2,
wobei Anwenden (308) der Aktualisierungsinformation auf das Sicherheitsprogramm Verwenden des zweiten Sicherheitsprogramm als das Sicherheitsprogramm aufweist.

4. Industriesystem (200) nach einem der vorstehenden Ansprüche,
wobei das Auswerten (304) der Aktualisierungsinformation ein Überprüfen, ob alle zu aktualisierenden Teile des Sicherheitsprogramms von der Aktualisierungsinformation abgedeckt sind, aufweist.

5. Industriesystem (200) nach einem der vorstehenden Ansprüche,
wobei das Auswerten (304) der Aktualisierungsinformation ein Überprüfen, ob die Aktualisierungsinformation keinen Widerspruch beinhaltet, aufweist.

6. Industriesystem (200) nach einem der vorstehenden Ansprüche,
wobei das Auswerten (304) der Aktualisierungsinformation ein Überprüfen, ob die Aktualisierungsinformation keinen unterschiedlichen Versionsnummern beinhaltet, aufweist.

7. Industriesystem (200) nach einem der vorstehenden Ansprüche,
wobei das Auswerten (304) der Aktualisierungsinformation auf einer digitalen Signatur von Artefakten, die in der Aktualisierungsinformation beschrieben sind, basiert.

8. Industriesystem (200) nach einem der vorstehenden Ansprüche,
wobei das Auswerten (304) der Aktualisierungsinformation auf einer Checksumme basiert.

9. Industriesystem (200) nach einem der vorstehenden Ansprüche,
wobei der vorgegebene Zustand einen Pausezustand oder einen vorgegebenen sicheren Zustand aufweist.

10. Industriesystem (200) nach einem der vorstehenden Ansprüche,
wobei der Aktor (204) einen Roboter und/ oder eine Maschine aufweist; und/ oder
wobei der Sensor (202) eingerichtet ist zum Erfassung von Messdaten bezüglich eines Menschen in einer Umgebung des Aktors.

11. Verfahren zum Aktualisieren eines Sicherheitsprogramms, wobei das Sicherheitsprogramms eingerichtet ist, um in einer Sicherheitsvorrichtung (206) ausgeführt zu werden zum Steuern eines Sensors (202) eines Industriesystems (200) und/ oder eines Aktors (204) des Industriesystems (200), das Verfahren aufweisend:
Erhalten (302) einer Aktualisierungsinformation;
Auswerten (304) der Aktualisierungsinformation;
basierend auf dem Auswerten (304) Ermitteln (306), ob die Aktualisierungsinformation auf das Sicherheitsprogramm angewendet werden kann; und
basierend auf dem Ermitteln (306) entweder Anwenden (308) der Aktualisierungsinformation auf das Sicherheitsprogramm oder Verwerfen (310) der Aktualisierungsinformation; und
Ermitteln, ob sich ein Sicherheitssystem, das von dem Sicherheitsprogramm überwacht wird, in einem vorgegebenen Zustand befindet;
wobei das Auswerten (304) der Aktualisierungsinformation und/ oder Anwenden (308) der Aktualisierungsinformation auf das Sicherheitsprogramm nur ausgeführt wird, falls ermittelt wird, dass sich das Sicherheitssystem in einem vorgegebenen Zustand befindet;
wobei die Aktualisierungsinformation mindestens eine der folgenden Informationen aufweist: Information für ein Update des Sicherheitsprogramms;
Information für Fehlerbehebung des Sicherheitsprogramm; Information für neue Funktionalität für das Sicherheitsprogramm;
wobei das Auswerten (304) der Aktualisierungsinformation einen automatisierten Abnahmetest aufweist, wobei zur Durchführung des Abnahmetests ein von einem Produktivsystem abgekapselter Namensraum eröffnet wird, der für eine softwareseitige Isolation der Software-Ressourcen sorgt,
wobei sich das Sicherheitssystem in einem sicheren Zustand befindet, sodass bei einem Testlauf der Zugriff auf den Sensor (202) und/ oder den Aktor (204) erfolgt und ein Ende-zu-Ende-Test stattfindet.

12. Computerlesbares Speichermedium, umfassend Befehle, die bei der Ausführung durch einen Computer diesen veranlassen, das Verfahren nach Anspruch 11 auszuführen.

## Claims

1. An industrial system (200), comprising:
a sensor (202) and/or an actuator (204);
a safety apparatus (206) configured to execute a safety program for controlling the sensor (202) and/or the actuator (204); and
an update device (208) configured:
to obtain (302) update information;
to evaluate (304) the update information;
based on the evaluation (304), to determine whether the update information can be applied to the safety program; and,
based on the determination (306), either to apply (308) the update information to the safety program or to discard (310) the update information;
wherein the update device (208) is further configured to determine whether a safety system, which is monitored by the safety program, is in a predefined state;
wherein the evaluation (304) of the update information and/or the application (308) of the update information to the safety program is/are only performed if it is determined that the safety system is in a predefined state;
wherein the update information comprises at least one of the following pieces of information: information for an update of the safety program;
information for a troubleshooting of the safety program; information for a new functionality for the safety program;
wherein the evaluation (304) of the update information comprises an automated acceptance test, wherein, to perform the acceptance test, a namespace encapsulated from the production system is opened that provides a software-side isolation of the software resources,
wherein the safety system is in a safe state so that access to the sensor (202) and/or the actuator (204) takes place during a test run and an end-to-end test takes place.

2. An industrial system (200) according to claim 1,
wherein the evaluation (304) of the update information comprises applying the update information to a second safety program.

3. An industrial system (200) according to claim 2,
wherein the application (308) of the update information to the safety program comprises using the second safety program as the safety program.

4. An industrial system (200) according to any one of the preceding claims,
wherein the evaluation (304) of the update information comprises checking whether all the parts of the safety program to be updated are covered by the update information.

5. An industrial system (200) according to any one of the preceding claims, wherein the evaluation (304) of the update information comprises checking whether the update information does not include a contradiction.

6. An industrial system (200) according to any one of the preceding claims, wherein the evaluation (304) of the update information comprises checking whether the update information does not include different version numbers.

7. An industrial system (200) according to any one of the preceding claims, wherein the evaluation (304) of the update information is based on a digital signature of artifacts that are described in the update information.

8. An industrial system (200) according to any one of the preceding claims,
wherein the evaluation (304) of the update information is based on a checksum.

9. An industrial system (200) according to any one of the preceding claims, wherein the predefined state has a pause state or a predefined safe state.

10. An industrial system (200) according to any one of the preceding claims, wherein the actuator (204) comprises a robot and/or a machine; and/or wherein the sensor (202) is configured to acquire measurement data with respect to a human in an environment of the actuator.

11. A method for updating a safety program, wherein the safety program is configured to be executed in a safety apparatus (206) in order to control a sensor (202) of an industrial system (200) and/or an actuator (204) of the industrial system (200), the method comprising:
obtaining (302) update information;
evaluating (304) the update information;
based on the evaluation (304), determining (306) whether the update information can be applied to the safety program; and
based on the determination (306), either applying (308) the update information to the safety program or discarding (310) the update information; and
determining whether a safety system, which is monitored by the safety program, is in a predefined state;
wherein the evaluation (304) of the update information and/or the application (308) of the update information to the safety program is/are only performed if it is determined that the safety system is in a predefined state;
wherein the update information comprises at least one of the following pieces of information: information for an update of the safety program;
information for a troubleshooting of the safety program; information for a new functionality for the safety program;
wherein the evaluation (304) of the update information comprises an automated acceptance test, wherein, to perform the acceptance test, a namespace encapsulated from the production system is opened that provides a software-side isolation of the software resources,
wherein the safety system is in a safe state so that access to the sensor (202) and/or the actuator (204) takes place during a test run and an end-to-end test takes place.

12. A computer readable storage medium comprising commands that, on the execution by a computer, cause it to carry out the method according to claim 11.

## Revendications

1. Système industriel (200), présentant :
un capteur (202) et/ ou un actionneur (204);
un dispositif de sécurité (206), configuré pour exécuter un programme de sécurité pour commander le capteur (202) et/ ou l'actionneur (204); et
un dispositif de mise à jour (208), configuré pour :
Obtenir (302) une information de mise à jour;
Évaluer (304) l'information de mise à jour;
sur la base de l'évaluation (304) déterminer (306), si l'information de mise à jour peut être appliquée au programme de sécurité; et
sur la base de la détermination (306), soit appliquer (308) l'information de mise à jour au programme de sécurité, soit rejeter (310) l'information de mise à jour;
dans lequel le moyen de mise à jour (208) est en outre configuré pour déterminer si un système de sécurité qui est surveillé par le programme de sécurité se trouve dans un état prédéfini;
dans lequel l'évaluation (304) de l'information de mise à jour et/ ou l'application (308) de l'information de mise à jour au programme de sécurité n'est effectuée que s'il est déterminé que le système de sécurité se trouve dans un état prédéfini;
dans lequel l'information de mise à jour présente au moins une des informations suivantes : une information pour une mise à jour du programme de sécurité; une information pour une correction d'erreur du programme de sécurité; une information pour une nouvelle fonctionnalité pour le programme de sécurité;
dans lequel l'évaluation (304) de l'information de mise à jour présente un test de réception automatisé, dans lequel, pour réaliser le test de réception, un espace de noms isolé d'un système de production est ouvert,
qui assure une isolation du côté logiciel des ressources logicielles,
dans lequel le système de sécurité se trouve dans un état sûr, de sorte que, lors d'un essai, l'accès au capteur (202) et/ ou à l'actionneur (204) est effectué et qu'un test de bout en bout a lieu.

2. Système industriel (200) selon la revendication 1,
dans lequel l'évaluation (304) de l'information de mise à jour présente une application de l'information de mise à jour à un deuxième programme de sécurité.

3. Système industriel (200) selon la revendication 2,
dans lequel l'application (308) de l'information de mise à jour au programme de sécurité présente l'utilisation du deuxième programme de sécurité comme programme de sécurité.

4. Système industriel (200) selon l'une des revendications précédentes,
dans lequel l'évaluation (304) de l'information de mise à jour présente une vérification, si toutes les parties du programme de sécurité à mettre à jour sont couvertes par l'information de mise à jour.

5. Système industriel (200) selon l'une des revendications précédentes,
dans lequel l'évaluation (304) de l'information de mise à jour présente une vérification, si l'information de mise à jour ne comporte aucune contradiction.

6. Système industriel (200) selon l'une des revendications précédentes,
dans lequel l'évaluation (304) de l'information de mise à jour présente une vérification, si l'information de mise à jour ne comporte aucun numéro de version différent.

7. Système industriel (200) selon l'une des revendications précédentes,
dans lequel l'évaluation (304) de l'information de mise à jour repose sur une signature numérique d'artefacts, qui sont décrits dans l'information de mise à jour.

8. Système industriel (200) selon l'une des revendications précédentes,
dans lequel l'évaluation (304) de l'information de mise à jour repose sur une somme de contrôle.

9. Système industriel (200) selon l'une des revendications précédentes,
dans lequel l'état prédéfini présente un état de pause ou un état sûr prédéfini.

10. Système industriel (200) selon l'une des revendications précédentes,
dans lequel l'actionneur (204) présente un robot et/ ou une machine; et/ ou
dans lequel le capteur (202) est configuré pour la détection de données de mesure concernant un être humain dans un environnement de l'actionneur.

11. Procédé de mise à jour d'un programme de sécurité, dans lequel le programme de sécurité est configuré pour être exécuté dans un dispositif de sécurité (206) pour commander un capteur (202) d'un système industriel (200) et/ ou un actionneur (204) du système industriel (200), le procédé présentant :
Obtenir (302) une information de mise à jour;
Évaluer (304) l'information de mise à jour;
sur la base de l'évaluation (304) déterminer (306), si l'information de mise à jour peut être appliquée au programme de sécurité; et
sur la base de la détermination (306), soit appliquer (308) l'information de mise à jour au programme de sécurité, soit rejeter (310) l'information de mise à jour; et
Déterminer, si un système de sécurité qui est surveillé par le programme de sécurité se trouve dans un état prédéfini;
dans lequel l'évaluation (304) de l'information de mise à jour et/ ou l'application (308) de l'information de mise à jour au programme de sécurité n'est effectuée que s'il est déterminé que le système de sécurité se trouve dans un état prédéfini;
dans lequel l'information de mise à jour présente au moins une des informations suivantes : une information pour une mise à jour du programme de sécurité; une information pour correction d'erreur du programme de sécurité; une information pour une nouvelle fonctionnalité pour le programme de sécurité;
dans lequel l'évaluation (304) de l'information de mise à jour présente un test de réception automatisé, dans lequel, pour réaliser le test de réception, un espace de noms isolé d'un système de production est ouvert,
qui assure une isolation du côté logiciel des ressources logicielles,
dans lequel le système de sécurité se trouve dans un état sûr, de sorte que, lors d'un essai, l'accès au capteur (202) et/ ou à l'actionneur (204) est effectué et qu'un test de bout en bout a lieu.

12. Support de stockage lisible par ordinateur, comprenant des instructions qui, lors de leur exécution par un ordinateur, amènent celui-ci à exécuter le procédé selon la revendication 11.
